(19) Europäisches Patentamt

European Patent Office

Office européen des brevets

(11) EP 1 537 686 B1

(12) EUROPÄISCHE PATENTSCHRIFT

(45) Veröffentlichungstag und Bekanntmachung des Hinweises auf die Patenterteilung:
22.02.2006 Patentblatt 2006/08

(21) Anmeldenummer: 03750514.6

(22) Anmeldetag: 10.09.2003

(51) Int Cl.:
*H04B 7/02* (2006.01)

(86) Internationale Anmeldenummer:
PCT/EP2003/010063

(87) Internationale Veröffentlichungsnummer:
WO 2004/025873 (25.03.2004 Gazette 2004/13)

(54) **VERFAHREN ZUR SIGNALÜBERTRAGUNG IN EINEM FUNK-KOMMUNIKATIONSSYSTEM**

METHOD FOR TRANSMITTING SIGNALS IN A RADIO COMMUNICATION SYSTEM

PROCEDE DE TRANSMISSION DE SIGNAUX DANS UN SYSTEME DE COMMUNICATION RADIO

(84) Benannte Vertragsstaaten:
AT BE BG CH CY CZ DE DK EE ES FI FR GB GR HU IE IT LI LU MC NL PT RO SE SI SK TR

(30) Priorität: 10.09.2002 DE 10241959

(43) Veröffentlichungstag der Anmeldung:
08.06.2005 Patentblatt 2005/23

(73) Patentinhaber: SIEMENS AKTIENGESELLSCHAFT
80333 München (DE)

(72) Erfinder:
• ROHLING, Hermann
  21073 Hamburg (DE)
• LAMPE, Matthias
  21073 Hamburg (DE)
• GIEBEL, Tobias
  21075 Hamburg (DE)
• SCHULZ, Egon
  80993 München (DE)
• ZIRWAS, Wolfgang
  82194 Gröbenzell (DE)

(56) Entgegenhaltungen:
WO-A-03/003672          DE-A- 10 027 115
DE-A- 19 914 797

• SRDJAN KRCO ET ALT: "Contribution to the 6th WWRF meeting London UK" WWRF WG4 AD-HOC NETWORKING -SUBGROUP, 17. Juni 2002 (2002-06-17), XP002285816 LONDON Gefunden im Internet: URL:www.acticom.de/ fileadmin/ data/publications/ WWRF6_White.pdf> [gefunden am 2004-06-24]

**Beschreibung**

Die Erfindung betrifft ein Verfahren zur Signalübertragung in einem Funk-Kommunikationssystem.

Bekannte Adhoc-Netze weisen in der Regel eine im Vergleich zu bekannten Mobilfunksystemen schlechtere Performance auf. Dies ist vor allem dadurch bedingt, dass bei einer Datenübertragung über eine größere Anzahl von so genannten Multihop-Stationen die genutzten Frequenzen in einem bestimmten Umkreis dieser Stationen nicht nochmals genutzt werden können. Diese unkoordinierte Nutzung von Übertragungsressourcen führt nachteilig zu einem stark ortsabhängigen Datendurchsatz.

Ein solches Funk-Kommunikationssystem ist aus DE 100 27 115 bekannt.

Aufgabe der Erfindung ist es daher, bekannte Adhoc-Netze vorteilhaft zur effizienteren Übertragung über große Entfernungen auszugestalten. Diese Aufgabe wird durch das Verfahren gemäß unabhängigem Patentanspruch 1 gelöst. Weiterbildungen der Erfindung sind Gegenstand abhängiger Patentansprüche.

Das erfindungsgemäße Verfahren und Einrichtungen zur Durchführung des Verfahrens werden nachfolgend anhand von Ausführungsbeispielen, die auf die Figuren Bezug nehmen, näher erläutert.

Dabei zeigen

FIG 1 ein MHSFN System mit zwei Hops und zwei Zwischenstationen,
FIG 2 eine Übersicht über verschiedene Realisierungsmöglichkeiten von MHSFN-Systemen,
FIG 3 ein Two Hop SFN System mit Zwischenstationen,
FIG 4 eine Beschreibung von Übertragungskanälen,
FIG 5 eine Zielfunktion für zwei Zwischenstationen,
FIG 6 eine weitere Zielfunktion,
FIG 7 ein Three Hop SFN System mit Zwischenstationen,
FIG 8 ein Clustern von jeweils mehreren Zwischenstationen, und
FIG 9 eine beispielhafte Anwendung eines verteilten Antennenkonzeptes in einem Adhoc-Netzwerk.

Beschrieben werden Verfahren zur Signalverarbeitung und zur Signalisierung bei der Datenübertragung in einem so genannten Mehrfach-Sprung- (MH - Multi-Hop) und Gleichwellen- (SFN - Single Frequency Network) Funk-Kommunikationssystem. SFNs sind beispielsweise aus Rundfunksystemen wie DVB-T (Digital Video Broadcasting-Terrestrial) oder DAB (Digital Audio Broadcasting) bekannt, bei denen ein größeres Gebiet durch mehrere Basisstationen unter Nutzung von gleichen Übertragungsfrequenzen versorgt wird.

1. Beschreibung des Systems

Betrachtet wird ein Funk-Kommunikationssystem bestehend aus einer sendenden Funkstation, einer empfangenden Funkstation und keiner, einer oder mehreren Zwischenstationen.

In einem derartigen System werden Signale, beispielsweise Datensignale, entweder direkt von der sendenden Funkstation zur empfangenden Funkstation oder über eine oder mehrere Zwischenstationen übertragen. Dabei kann eine Zwischenstation (EP - Extension Point) die von der sendenden Funkstation (AP - Access Point) gesendeten Signale direkt oder indirekt über weitere Zwischenstationen zu der empfangenden Funkstation (MT - Mobile Terminal) weiterleiten. Die Weiterleitung über mehrere Stationen wird auch als Multi-Hop (MH) bezeichnet. Weiterhin können mehrere Zwischenstationen gleichzeitig dasselbe Signal bzw. dieselben Daten empfangen und gemeinsam, d.h. gleichzeitig und auf der gleichen Frequenz, mit Hilfe eines SFN direkt zu der empfangenden Funkstation oder weiteren Zwischenstationen senden.

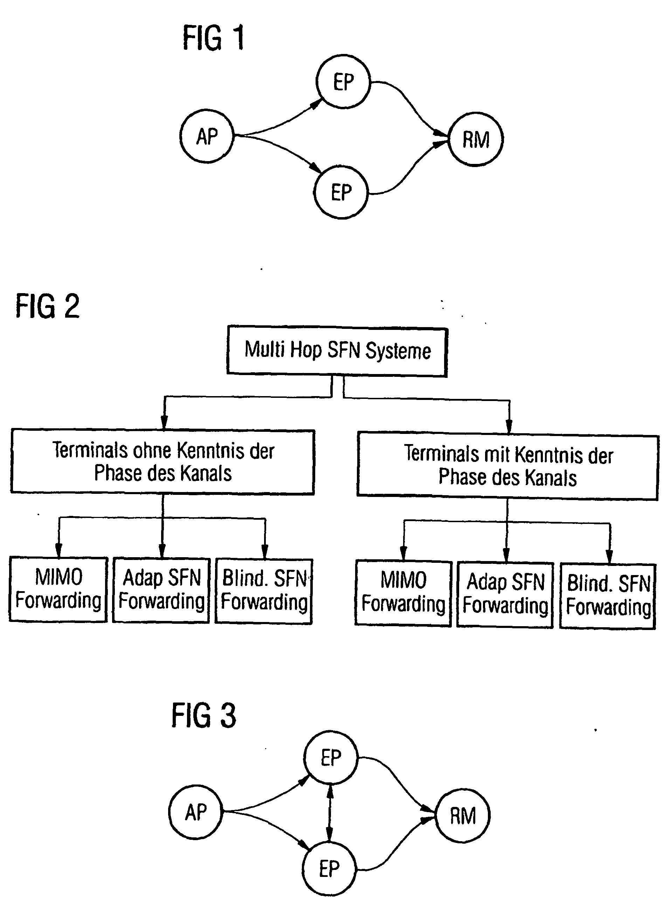

Dieses System wird nachfolgend als Mehrfach-Sprung-Gleichwellen-Netz (MHSFN - Multi-Hop Single Frequency Network) bezeichnet. In der FIG 1 ist beispielhaft ein MHSFN mit einer sendenden Funkstation AP, zwei Hops über zwei Zwischenstationen EP und einer empfangenden Funkstation RM dargestellt. Dabei befinden sich die beiden beispielhaft dargestellten Zwischenstationen EP innerhalb der Übertragungsreichweite der sendenden Funkstation AP, die in einem ersten Schritt Daten, die für die empfangende, außerhalb der Übertragungsreichweite der sendenden Funkstation AP befindliche empfangende Funkstation RM vorgesehen sind, zu den Zwischenstationen EP sendet. In einem zweiten Schritt senden die Zwischenstationen EP gleichzeitig und auf der gleichen Frequenz die Daten zu der empfangenden Funkstation RM weiter. Eine Synchronisation der Zwischenstationen kann beispielsweise durch die sendende Funkstation erfolgen, wodurch vorteilhaft eine Phasenvorentzerrung am Ort der Zwischenstationen durchgeführt werden kann, um konstruktive Überlagerungen der Signale am Ort der empfangenden Funkstation sicherzustellen. Vorteilhaft wird durch ein derartiges Gleichwellennetz weiterhin die Übertragungsreichweite durch ein erzielbares größeres Signal-zu-Rausch-Verhältnis erhöht sowie der Einfluss von Abschattungseffekten verringert. Weiterhin wird die Übertragungssicherheit erhöht, da auch bei einem Abschalten einer der Zwischenstationen - beispielsweise durch den Nutzer - die Datenübertragung zu der empfangenden Funkstation durch weitere aktiv weiterleitende Zwischenstationen sichergestellt wird.

1.1 Signalverarbeitung und Signalisierung in einem MHSFN-System

In einem MHSFN-System können in den Zwischenstationen ES vorteilhaft Signalverarbeitungsverfahren, wie beispielsweise Vorverzerrungs- oder Entzerrungsprozeduren, eingesetzt werden. Um die Leistung dieser Prozeduren zu erhöhen, können zudem Kenngrößen durch eine Signalisierung zwischen den Funkstationen AP und/oder RM und den Zwischenstationen EP ausgetauscht werden. Mit diesen Informationen können beispielsweise Gewichtungsfaktoren in jeder Zwischenstation vor der Weiterleitung zu der empfangenden Funkstation bestimmt werden, wodurch vorteilhaft ein höheres Signal-zu-Rausch-Verhältnis am Ort der empfangenden Funkstation erzielt wird. Im Vergleich zu einer einfachen Phasenvorverzerrung ohne Berücksichtigung von Kenngrößen kann hierdurch ein Gewinn erzielt werden, da Verbindungen mit niedrigen Signal-zu-Rausch-Verhältnis-Werten die Empfangssignale an der empfangenden Funkstation nicht stören.

Dabei sind grundsätzlich drei Signalverarbeitungs- bzw. Signalisierungskonzepte unterscheidbar.

Ein erster Ansatz einer weitgehend optimalen Signalverarbeitung basiert auf einer Kenntnis aller Empfangssymbole und Kanaleigenschaften. Dieses im folgenden als MIMO (Multiple Input Multiple Output) Forwarding bezeichnete Konzept ist jedoch mit einem sehr hohen Signalisierungsaufwand verbunden.

Der zweite Ansatz der Signalverarbeitung basiert auf lediglich der Kenntnis der Kanaleigenschaften. Von den Empfangssymbolen werden lediglich statistische Kenngrößen als bekannt vorausgesetzt. Bei diesem Ansatz werden Informationen über den Kanalzustand zwischen den Stationen ausgetauscht. Eine Aktualisierung dieser Informationen ist dabei beispielsweise nur bei signifikanter Änderung der Kanaleigenschaften erforderlich, welches vorteilhaft zu einem reduzierten Signalisierungsaufwand führt. Dieses Konzept wird im folgenden als Adapted SFN Forwarding bezeichnet.

Der dritte Ansatz ist signalisierungsfrei. Die Signalverarbeitung basiert ausschließlich auf den in der jeweiligen Station bzw. Zwischenstation vorliegenden Informationen oder Kenngrößen des MHSFN System, wie beispielsweise Kanaldämpfung und/oder Kanalrauschen. Zusätzliche Informationen weiterer oder aller Zwischenstation sind nicht bekannt. Dieses Konzept wird im folgenden als Blind SFN Forwarding bezeichnet.

Durch eine gezielte Signalverarbeitung bzw. durch spezielle Vorverzerrungs- und/oder Entzerrungsprozeduren in den Zwischenstationen kann beispielsweise vorteilhaft eine konstruktive Überlagerung (Superposition) der Signale am Ort der empfangenden Funkstation erzielt werden. Um eine derartige phasenrichtige Überlagerung der Signale am Empfänger zu erzielen, müssen jedoch bei der Signalverarbeitung genaue Kenntnisse über den erwarteten Übertragungskanal vorliegen und berücksichtigt werden. Hierbei kann gegebenenfalls auf reziproke Eigenschaften des Funkkanals zurückgegriffen werden, die Rückschlüsse auf das Verhalten des Funkkanals anhand von empfangenen Signalen ermöglichen. Dabei ist jedoch zu berücksichtigen, dass sich der analoge Übertragungskanal aus dem Funkkanal und dem so genannten analogen Sende- bzw. Empfangs-Fond End zusammensetzt. Während die Reziprozität des Funkkanals in hinreichendem Maße gegeben ist, kann sich das Übertragungsverhalten des Sende- vom Empfangs- Front End insbesondere im Phasengang stark unterscheiden. Damit kann nur unter Berücksichtigung dieses Unterschiedes eine phasenrichtige Voraussage des Übertragungskanals durchgeführt werden.

Im folgenden werden zwei Typen von Stationen (Terminals) unterschieden:

- Terminals, die über eine phasenrichtige Voraussage des Übertragungskanals verfügen, und
- Terminals, die nicht über eine phasenrichtige Voraussage des Übertragungskanals verfügen.

In der FIG 2 ist eine Übersicht über die verschiedenen Realisierungsmöglichkeiten der MHSFN Systeme gegeben. Neben den vorangehend genannten Konzepten sind weiterhin auch Kombinationen dieser Realisierungen möglich.

Abhängig von dem Typ der verwendeten Terminals und Signalisierungskonzept sind unterschiedliche Signalverarbeitungsalgorithmen vorteilhaft einsetzbar. Nachfolgend werden verschiedene Techniken der Signalverarbeitung sowie Vorverzerrungs- und/oder Entzerrungsprozeduren anhand von Beispielen beschrieben.

2. Beispiele

Zur Verdeutlichung der vorangehend genannten Systemkonzepte werden im Folgenden beispielhafte Systemrealisierungen beschrieben.

Als Basis für die folgenden Beispiele wird ein bekanntes OFDM (Orthogonal Frequency Division Multiplex) Übertragungssystem sowie eine Sendeleistungsbegrenzung jedes einzelnen Subträgers mittels einer Spektrumsmaske vorausgesetzt. Das erfindungsgemäße Verfahren ist jedoch nicht auf diese Randbedingungen beschränkt, sondern in gleicher Weise in Systemen mit unterschiedlichen Randbedingungen einsetzbar.

Die genannten beispielhaften Randbedingungen ermöglichen eine separate und unabhängige Untersuchung eines einzelnen Subträgers, wodurch die Übertragungsperformance jedes Subträgers vorteilhaft unabhängig von anderen Subträgern des OFDM Systems analysiert und optimiert werden kann.

2.1 Two Hop SFN (Zwei-Sprung-Gleichwellennetzwerk)

FIG 3 zeigt ein so genanntes Two Hop SFN System mit zwei Zwischenstationen EP.

Die nachfolgend beschriebenen Verfahren dienen einer Optimierung der Übertragungsperformance. Hierzu wird beispielsweise das Signal-zu-Rausch-Verhältnis (SNR - Signal to Noise Ratio) jedes Subträgers am Empfänger $SNR_{SFN}$ maximiert. Weiterhin werden Signalisierungsprotokolle beschrieben, die eine derartige optimale Weiterleitung unterstützen.

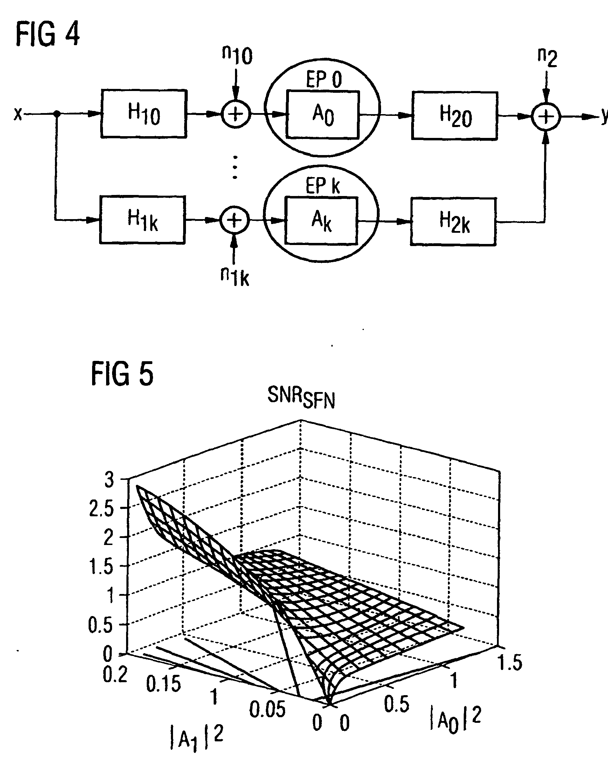

Zur analytischen Beschreibung wird gemäß FIG 4 eine Nomenklatur für die Beschreibung der Übertragungskanäle festgelegt. Sie beschreibt Übertragungsfaktoren und Rauschterme für einen Subträger.

Mit $H_{1k}$ wird der Übertragungsfaktor von der sendenden Funkstation zu der Zwischenstation EP Nummer k bezeichnet. Das Signal $n_{1k}$ beschreibt das Rauschen an der Zwischenstation EP Nummer k. Die Anzahl der Zwischenstationen EP ist mit K bezeichnet, so dass der Index k von 0 bis K-1 läuft. Die Rauschleistung wird mit $\sigma_{1k}^2$ bezeichnet. Der Index 1 weist auf den ersten Hop (Sprung) des Two Hop Systems hin. Äquivalent hierzu ist mit $H_{2k}$ der Übertragungsfaktor von der Zwischenstation EP Nummer k zu der empfangenden Funkstation bezeichnet. Das Signal $n_2$ beschreibt das Rauschen an der empfangenden Funkstation. Die Rauschleistung wird mit $\sigma_2^2$ bezeichnet. Der Index 2 weist auf den zweiten Hop (Sprung) des Two Hop Systems hin. Die komplexen Faktoren $A_k$ beschreiben eine jeweilige Gewichtung in der Zwischenstation EP Nummer k.

Aus dieser Nomenklatur und der Randbedingung der Sendeleistungsbegrenzung auf 1 folgen für die komplexen Faktoren $A_k$ folgende Grenzen $0 \leq |A_k|^2 \leq 1/(|H_{1k}|^2 + \sigma_{1k}^2)$.

2.2.1 Ohne Kenntnisse der Kanalphasen

In einem ersten Beispiel wird ein System mit Zwischenstationen EP ohne Kenntnisse der Kanalphasen des Sendekanals für die Weiterleitung angenommen.

Da die Kanalphasen der $H_{2k}$ in den Zwischenstationen EP nicht bekannt sind, kann nicht immer eine konstruktive Überlagerung der Signale am Ort der empfangenden Funkstation erzielt werden. Die Empfangssignale überlagern sich vielmehr mit einer zufälligen Phase, wodurch sich im Mittel lediglich die Leistungen des Empfangssignale addieren. Das Signal-zu-Rausch-Verhältnis am Empfänger errechnet sich damit zu

$$SNR_{SFN} = \frac{\sum_{k=0}^{K-1} |H_{1k}|^2 |H_{2k}|^2 |A_k|^2}{\sigma_2^2 + \sum_{k=0}^{K-1} \sigma_{1k}^2 |H_{2k}|^2 |A_k|^2} \ .$$

Die Zielfunktion ($SNR_{SFN}$) ist nun unter Variation der $|A_k|^2$ zu maximieren. Dabei ist zu beachten, dass die Parameter $|A_k|^2$ begrenzt sind. Die Optimierung ist demnach nur in dem durch die Begrenzung der $|Ak|^2$ gegebenen Gültigkeitsbereich durchzuführen.

2.2.1.1 Mit Kanalparameter- und Empfangswert-Signalisierung (MIMO Forwarding gemäß erstem Ansatz)

Eine Optimierung des Signal-zu-Rausch-Verhältnisses $SNR_{SFN}$ am Ort des Empfängers kann bei einer Signalisierung von Kanalparametern und Empfangswerten unter Berücksichtigung aller Systemparameter vorteilhaft erzielt werden.

2.2.1.2 Mit Kanalparameter-Signalisierung (Adaptive SFN Forwarding gemäß zweitem Ansatz)

Die Optimierung des Signal-zu-Rausch-Verhältnisses $SNR_{SFN}$ am Ort des Empfängers kann bei einer Signalisierung von Kanalparametern unter Berücksichtigung dieser Systemparameter durchgeführt werden.

Zur Maximierung ist eine Voruntersuchung des Verhaltens der Zielfunktion hilfreich. Dabei ist festzustellen, dass die "Höhenlinien" der Zielfunktion "Geraden" der Dimension K-1 bzw. Hyperebenen der Dimension K-1 im $R^K$ sind. Dies bedeutet, dass keine "Höhenlinie" eine Punkt-Charakteristik aufweist. Hierdurch kann die Funktion innerhalb des Gültigkeitsbereiches kein globales Maximum oder Minimum aufweisen. Die Funktion wird auf dem Rand des Gültigkeitsbereiches maximal.

Da der Gültigkeitsbereich durch Hyperebenen im $R^K$ begrenzt ist, ist das Maximum der Zielfunktion in einer Ecke (Vertex) des Gültigkeitsbereiches zu finden. In bestimmten Fällen kann die Höhenlinien-Hyperebene, die zu dem maximalen $SNR_{SFN}$ gehört, auf einer begrenzenden Hyperebenen liegen. Da jeder Punkt und damit auch jede Ecke den gleichen Wert auf einer Höhenlinien hat, kann in diesem Fall eine beliebige Ecke ausgewählt werden.

FIG 5 ist ein Beispiel für eine Zielfunktion, das $SNR_{SFN}$, für zwei Zwischenstationen in Abhängigkeit von den Parametern $|A_k|^2$ dargestellt. Die Kanalübertragungsfaktoren wurden in diesem Beispiel zufällig gewählt. Aus FIG 5 ist erkennbar, dass die Höhenlinien Geraden sind, und dass die Zielfunktion in einer Ecke des Gültigkeitsbereiches maximal wird.

Diese Analyse zeigt, dass das optimale $SNR_{SFN}$ immer in einer Ecke des Gültigkeitsbereiches erreicht wird. Eine Ecke beschreibt einen Parametersatz $|A_k|^2$, bei dem eine oder mehrere Zwischenstationen EP mit maximaler Leistung senden ($|A_k|^2 = 1/(|H_{1k}|^2+ \sigma_{1k}^2)$), weitere Zwischenstationen EP jedoch keine Weiterleitung durchführen ($|A_k|^2 = 0$). Keine der Zwischenstationen sendet mit einer Leistung zwischen Null und dem Maximalwert ($0 < |A_k|^2 < 1/(|H_{1k}|^2+ \sigma_{1k}^2)$). Die Maximierung des $SNR_{SFN}$ wird somit durch eine geeignete Auswahl von Zwischenstationen EP, die mit maximaler Leistung senden, erzielt.

Diese Auswahl aktiver Zwischenstationen kann beispielsweise mit Hilfe eines Auswahlkriteriums erreicht werden. Sind L+1 Zwischenstationen ausgewählt und senden mit maximaler Leistung, so kann eine Vorschrift definieren werden, die beschreibt, unter welchen Voraussetzungen eine Zwischenstation abzuschalten ist, um das $SNR_{SFN}$ zu erhöhen. Die Zwischenstation Nummer L soll beispielsweise genau dann abgeschaltet werden, wenn dadurch das $SNR_{SFN}$ erhöht oder unverändert bleibt. Beschreibt $SNR_{SFN\,L}$ das Signal-zu-Rausch-Verhältnis, wenn alle Zwischenstationen (Nummer 0 bis Nummer L) senden, und $SNR_{SFN\,L-1}$ das Signal-zu-Rausch-Verhältnis, wenn nur noch die Zwischenstationen von Nummer 0 bis Nummer L-1 senden, lässt sich diese Bedingung wie folgt formulieren:

$$SNR_{SFN_L} \leq SNR_{SFN_{L-1}}$$

$$\Leftrightarrow \frac{\sum_{k=0}^{L} |H_{1k}|^2 |H_{2k}|^2 |A_k|^2}{\sigma_2^2 + \sum_{k=0}^{L} \sigma_{1k}^2 |H_{2k}|^2 |A_k|^2} \leq \frac{\sum_{k=0}^{L-1} |H_{1k}|^2 |H_{2k}|^2 |A_k|^2}{\sigma_2^2 + \sum_{k=0}^{L-1} \sigma_{1k}^2 |H_{2k}|^2 |A_k|^2}$$

$$\Leftrightarrow SNR_{SFN_L} \geq SNR_{1L} = \frac{|H_{1L}|^2}{\sigma_{1L}^2}$$

Hierbei zeigt sich, dass Zwischenstation Nummer L in den Fällen abzuschalten ist, wenn ihr Empfangs-Signal-zu-Rausch-Verhältnis $SNR_{1L}$ kleiner ist als das bisherige Signal-zu-Rausch-Verhältnis ($SNR_{SFN\,L}$) an der empfangenden Funkstation.

Basierend auf dieser Erkenntnis kann ein Algorithmus mit den folgenden Schritten formuliert werden:

1. Ermittle das $SNR_{SFN}$ für den Fall, dass alle K Zwischenstationen EP mit maximaler Sendeleistung weiterleiten;
2. Vergleiche das ermittelte $SNR_{SFN}$ mit den Zwischenstations-Empfangs-Signal-zu-Rausch-Verhältnissen $SNR_{1k}$ und Deaktiviere alle Zwischenstationen EP mit $SNR_{1k} \leq SNR_{SFN}$;
3. Beende die Routine wenn keine weitere Zwischenstation EP deaktiviert wurde;
4. Ermittle das resultierende $SNR_{SFN}$ und gehe zu Schritt 2.

Da in jedem Durchlauf der Schritte das $SNR_{SFN}$ erhöht wird, bleiben die Entscheidungen vorheriger Durchläufe gültig, sodass sie nicht erneut überprüft oder korrigiert werden müssen. Dies zeigt das konvergente Verhalten des Algorithmus, der nach mindestens K Durchläufen ein optimales Ergebnis errechnet hat und dann abbricht.

Ähnlich dem beschriebenen Deaktivierungskriterium kann in gleicher Weise auch ein Aktivierungskriterium definiert werden. In diesem Fall wird eine neue Zwischenstation Nummer L+1 aktiviert, wenn ihr Empfangs-Signal-zu-Rausch-Verhältnis ($SNR_{1L+1}$) größer ist als das bisherige Signal-zu-Rausch-Verhältnis ($SNR_{SFN\,L}$) am Ort der empfangenden Funkstation, welches sich aus den bisher aktiven Zwischenstationen Nummer 0 bis L ergeben hat.

Die beschriebenen Analysen können separat für jeden OFDM-Subträger durchgeführt werden. Um die vorangehende Nomenklatur auf Subträger zu erweitern, müssen lediglich die System- und Kanal-Parameter subträgerweise beschrieben werden.

Aus diesen Kriterien ist folgendes Signalisierungskonzept ableitbar:

1. Die empfangende Funkstation signalisiert beispielsweise periodisch das ermittelte Empfangs-Signal-zu-Rausch-Verhältnis $SNR_{SFN}(f)$ für jeden OFDM-Subträger f zu allen Zwischenstationen EP,

2. Jede Zwischenstation EP vergleicht subträgerweise das signalisierte Signal-zu-Rausch-Verhältnis $SNR_{SFN}(f)$ mit dem eigenen ermittelten Empfangs- Signal-zu-Rausch-Verhältnis $SNR_{1k}(f)$, wobei

a. bei $SNR_{1k}(f) \leq SNR_{SFN}(f)$ die Zwischenstation EP Nummer k kein Signal auf dem Subträger f sendet, und
b. bei $SNR_{1k}(f) > SNR_{SFN}(f)$ die Zwischenstation EP Nummer k mit maximaler Leistung $|A_k(f)|^2 \leq 1/(|H_{1k}(f)|^2 + \sigma_{1k}^2(f))$ auf diesem Subträger f sendet.

2.2.1.3 Ohne Signalisierung (Blind SFN Forwarding gemäß drittem Ansatz)

Eine Optimierung des Signal-zu-Rausch-Verhältnisses am Ort des Empfängers ($SNR_{SFN}$) kann ohne Signalisierung nur unter Berücksichtigung von lokal bekannten Systemparametern durchgeführt werden.

2.2.2 Mit Kenntnis der Phase des Kanals

In einem zweiten Beispiel wird ein System mit Zwischenstationen EP mit einer Kenntnis der Kanalphasen des Sendekanals für die Weiterleitung angenommen.

Da die Phasen der $H_{2k}$ in den Zwischenstationen EP nicht bekannt sind, kann nicht immer eine vorteilhafte konstruktive Überlagerung der Signale am Empfänger erzielt werden. Die Empfangssignale überlagern sich mit zufälliger Phase, wodurch sich im Mittel lediglich die Leistungen der Empfangssignale addieren. Das Signal-zu-Rausch-Verhältnis am Ort der empfangenden Funkstation errechnet sich damit zu:

$$SNR_{SFN} = \frac{\left(\sum_{k=0}^{K-1} |H_{1k}| \, |H_{2k}| \, |A_k|\right)^2}{\sigma_2^2 + \sum_{k=0}^{K-1} \sigma_{1k}^2 \, |H_{2k}|^2 |A_k|^2} \; .$$

Diese Zielfunktion $SNR_{SFN}$ ist nun unter Variation der $|A_k|^2$ zu maximieren. Dabei ist zu beachten, dass die Parameter $|A_k|^2$ begrenzt sind. Die Optimierung ist demnach nur in einem durch die Begrenzung der $|A_k|^2$ gegebenen Gültigkeitsbereich durchzuführen.

2.2.2.1 Mit Kanalparameter- und Empfangswert-Signalisierung (MIMO Forwarding gemäß erstem Ansatz)

Eine Optimierung des Signal-zu-Rausch-Verhältnisses am Ort der empfangenden Funkstation $SNR_{SFN}$ kann bei einer Signalisierung vorteilhaft unter Berücksichtigung aller Systemparameter durchgeführt werden.

2.2.2.2 Mit Kanalparameter-Signalisierung (Adap. SFN Forwarding gemäß zweitem Ansatz)

Eine Optimierung des Signal-zu-Rausch-Verhältnisses am Ort der empfangenden Funkstation $SNR_{SFN}$ kann bei dieser Signalisierung vorteilhaft unter Berücksichtigung der Kanalparameter durchgeführt werden.

Zur Maximierung ist erneut eine Voruntersuchung des Verhaltens der Zielfunktion hilfreich. Dabei wird festgestellt, dass die Höhenlinien der Zielfunktion Hyperbeln der Dimension K-1 bzw. Hyperboloids der Dimension K-1 im $R^K$ sind. Dies bedeutet, dass keine Höhenlinie eine Punkt-Charakteristik aufweist, und die Funktion somit innerhalb des Gültigkeitsbereiches kein globales Maximum oder Minimum aufweist. Die Funktion wird auf dem Rand des Gültigkeitsbereiches maximal. Mittels der Hauptachsentheorie kann zudem gezeigt werden, dass alle Hyperbeln dieselben Hauptachsen haben.

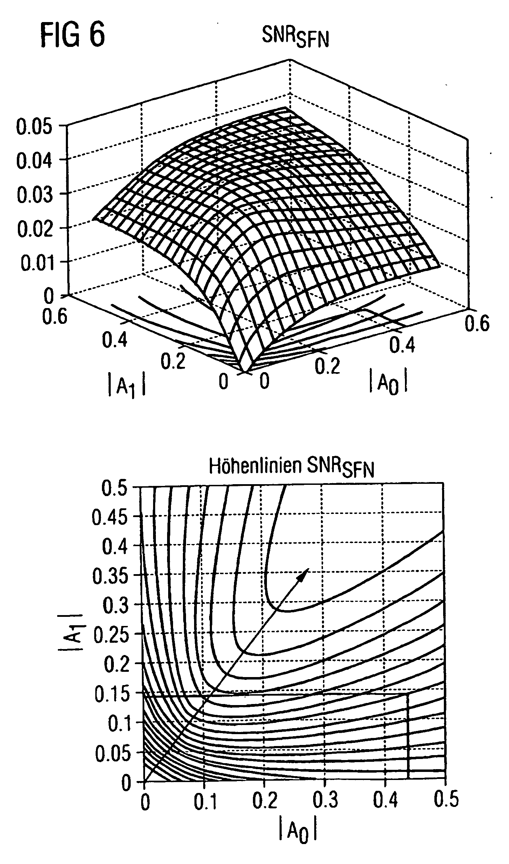

FIG 6 zeigt ein Beispiel für eine Zielfunktion, die das Signal-zu-Rausch-Verhältnis $SNR_{SFN}$ für zwei Zwischenstationen EP in Abhängigkeit von den Parametern $|A_k|^2$ darstellt. Die Kanalübertragungsfaktoren wurden in diesem Beispiel zufällig gewählt. Es ist dabei erkennbar, dass die Höhenlinien Hyperbeln sind, und dass die Zielfunktion auf dem Rand des Gültigkeitsbereiches maximal wird. Im dem unteren Bild der FIG 6 ist neben den Höhenlinien der Gültigkeitsbereich und die gemeinsame Hauptachse der Hyperbeln dargestellt.

Eine Analyse zeigt, dass die Zielfunktion $SNR_{SFN}$ auf dem Rand des Gültigkeitsbereiches maximal wird. Die Ränder des Gültigkeitsbereiches sind dabei durch Hyperebenen definiert. In einem ersten Schritt wird die begrenzende Hyperebene gesucht, auf der das Optimum zu finden ist. Wie aus der FIG 6 deutlich wird, ist es die Hyperebene, die von der Hauptachse als "erstes" geschnitten wird, d.h. der Schnittpunkt zwischen Hauptachse und Hyperebene liegt am dichtesten am Koordinatenursprung. Wie mit Hilfe der Hauptachsentheorie gezeigt werden kann, liegt ein Parametersatz mit $|A_k| = \lambda \, \sigma_2 \, |H_{1k}|/(\sigma_{1k}^2 \, |H_{2k}|)$ auf der Hauptachse und ein Skalar $\lambda$ beschreibt die Länge eines beliebig gewählten Vektors. Nun wird ein $\lambda_k$ so gewählt, dass der Wichtungsfaktor $|A_k|$ maximal wird. Hieraus folgt:

$$\lambda_k = \sqrt{\frac{SNR_{2k}}{SNR_{1k}} \cdot \frac{1}{SNR_{1k}+1}}$$

Die Hyperebene, die als erstes von der Hauptachse geschnitten wird, ist durch den kürzesten Vektor und damit durch den kleinsten Wert $\lambda_k$ gekennzeichnet $\min_k(\lambda_k)$.

Es wird im folgenden als sinnvoll erachtet, die Nummerierung der Zwischenstationen EP entsprechend der Größe des Wertes $\lambda_k$ zu sortieren, so dass die Zwischenstation EP mit der Nummer k=0 den kleinsten Wert $\lambda_k$ aufweist, und sich die Reihenfolge $\lambda_k \le \lambda_{k+1}$ ergibt.

Durch diese Sortierung folgt $\lambda_0 = \min_k(\lambda_k)$, wodurch die Hyperebene, auf der das Maximum liegt, durch $|A_0|^2 = 1/(|H_{10}|^2 + \sigma_{10}^2)$ definiert ist. Die Zwischenstation EP mit dem kleinsten Wert $\lambda_k$ muss mit maximaler Sendeleistung senden, um das $SNR_{SFN}$ zu maximieren. Sollten mehrere Zwischenstationen, beispielsweise N, einen gleichen minimalen Wert $\lambda_0 = \lambda_k$ für k<N haben, so senden alle N Zwischenstationen mit einer maximalen Leistung.

$$|A_k| = \frac{1}{\sqrt{|H_{1k}|^2 + \sigma_{1k}^2}} = \frac{1}{\sqrt{\sigma_{1k}^2 (SNR_{1k}+1)}} \quad \text{für } 0 \le k < N$$

Durch diese Weiterleitung der N Zwischenstationen mit maximaler Sendeleistung ergibt sich am Ort der empfangenden Funkstation ein Signal-zu-Rausch-Verhältnis von:

$$SNR_N = \frac{\left(\sum_{k=0}^{N-1} \sqrt{\frac{|H_{1k}|^2 |H_{2k}|^2}{|H_{1k}|^2 + \sigma_{1k}^2}}\right)^2}{\sigma_2^2 + \sum_{k=0}^{N-1} \frac{\sigma_{1k}^2 |H_{2k}|^2}{|H_{1k}|^2 + \sigma_{1k}^2}} = \frac{\left(\sum_{k=0}^{N-1} \sqrt{\frac{SNR_{1k} SNR_{2k}}{SNR_{1k}+1}}\right)^2}{1 + \sum_{k=0}^{N-1} \frac{SNR_{2k}}{SNR_{1k}+1}} = \frac{\left(\sum_{k=0}^{N-1} \lambda_k SNR_{1k}\right)^2}{1 + \sum_{k=0}^{N-1} \lambda_k^2 SNR_{1k}}$$

Durch die Fixierung der Sendeleistung der N Zwischenstationen wird eine Kante des Gültigkeitsbereiches, eine Hyperebene der Dimension K-N, definiert. Im folgenden Schritt wird auf dieser Hyperebene das Maximum der Zielfunktion ermittelt. Dabei ist festzustellen, dass die Höhenlinien der Zielfunktion auf dieser Hyperebene im allgemeinen Ellipsoiden sind und genau eine Höhenlinie zu einem Punkt entarten. Die Hauptachsentheorie zeigt, dass dieser Punkt durch den folgenden Parametersatz definiert ist:

$$|A_k| = \frac{\sigma_2 |H_{1k}|}{\sigma_{1k}^2 |H_{2k}|} \cdot \Lambda_N = \sqrt{\frac{SNR_{1k}}{\sigma_{1k}^2 SNR_{2k}}} \cdot \Lambda_N \quad \text{für } N \le k < K$$

$$\Lambda_N = \frac{1 + \sum_{k=0}^{N-1} \lambda_k^2 SNR_{1k}}{\sum_{k=0}^{N-1} \lambda_k SNR_{1k}}$$

Im einem letzten Schritt wird geprüft, ob das Ergebnis im Gültigkeitsbereich liegt. Durch die vorgenommene Neusortierung wird hierzu lediglich das errechnete $|A_k|^2$ für k=N mit der zulässigen Maximalleistung verglichen. Ähnlich wie oben kann gezeigt werden, dass auch diese Zwischenstation mit der Nummer k=N mit maximaler Leistung senden muss, um das Optimum zu erreichen, falls durch die errechnete Lösung die Maximalleistung überschritten wird. Die Maximalleistung wird für den Fall überschritten, dass $\gamma_k < \Lambda_N$ ist. Auf der damit neu definierten Hyperebene der Dimension K-N-1 ist wie vorangehend beschrieben fortzufahren.

Senden die Zwischenstationen entsprechend dem Ergebnis dieser Rechnung, wird das maximale $SNR_{SFN}$ am Ort der empfangenden Funkstation erzielt. Dabei hat das maximale $SNR_{SFN}$ folgenden Betrag:

$$SNR_{SFN} = SNR_N + \sum_{k=N}^{K-1} SNR_{1k}$$

Basierend auf dieser Ableitung kann ein Algorithmus mit den folgenden Schritten formuliert werden:

1. Berechne

$$\lambda_k = \sqrt{\frac{SNR_{2k}}{SNR_{1k}} \cdot \frac{1}{SNR_{1k} + 1}} \quad \text{für alle } 0 \le k < K$$

und sortiere die Indizes k entsprechend Reihenfolge $\lambda_k \le \lambda_{k+1}$ um;

2. Setze N = 1;

   a. Berechne

$$\Lambda_N = \frac{1 + \sum_{k=0}^{N-1} \lambda_k^2 SNR_{1k}}{\sum_{k=0}^{N-1} \lambda_k SNR_{1k}} \quad ;$$

3. Falls $\lambda_{k=N} \le \Lambda_N$, setze N = N + 1 und gehe zu Schritt 3;

a. Berechne die Faktoren

$$|A_k| = \frac{1}{\sqrt{\sigma_{1k}^2 (SNR_{1k} + 1)}} \quad \text{für } 0 \le k < N \quad,$$

bzw.

$$|A_k| = \sqrt{\frac{SNR_{1k}}{\sigma_{1k}^2 SNR_{2k}}} \cdot \Lambda_N \quad \text{für } N \le k < K \ .$$

Die Iteration bricht spätestens ab, wenn alle Zwischenstationen EP ausgewählt wurden.

Während der Iteration weist der Wert $\Lambda_N$ ein Verhalten auf, das es erlaubt, den Vergleich für jede Zwischenstation EP einzelnd durchzuführen. Es muss dabei nicht darauf geachtet werden, ob mehrere Zwischenstationen EP gleiche $\lambda_k$ aufweisen.

Darüber hinaus ist festzustellen, dass für eine ausgewählte Zwischenstation EP $k \le N$ auch nach Abschluss der Iteration $\lambda_k \le \Lambda_N$ gilt. Aus dieser Eigenschaft und dem obigen Algorithmus kann folgendes Signalisierungskonzept abgeleitet werden:

1. Alle Zwischenstationen EP übermitteln beispielsweise periodisch das $SNR_{1k}$ zu der empfangenden Funkstation;
2. bei diesen Punkt-zu-Punkt-Verbindungen ermittelt die empfangende Funkstation die $SNR_{2k}$ durch entsprechende Messungen;
3. in der empfangenden Funkstation wird über den oben beschriebenen Algorithmus das endgültige $\Lambda_N$ berechnet;
4. die empfangende Funkstation sendet beispielsweise periodisch das errechnete $\Lambda_N$ an alle Zwischenstationen EP;
5. bei diesem Broadcast ermittelt jede Zwischenstation EP individuell das $SNR_{2k}$ durch entsprechende Messungen;
6. jede Zwischer

a. den Wert $|A_k| = \sqrt{\dfrac{SNR_{1k}}{\sigma_{1k}^2 SNR_{2k}}} \cdot \Lambda_N$ ;

b. sollte das Ergebnis die maximale Sendeleistung der Zwischenstation überschreiten, wird es auf diesen Maximalwert begrenzt

$$|A_k| = \frac{1}{\sqrt{\sigma_{1k}^2 (SNR_{1k} + 1)}}$$

und in Zukunft $SNR_{1k}$ zu der empfangenden Funkstation gesendet, ansonsten braucht das $SNR_{1k}$ nicht zu der empfangenden Funkstation übermittelt werden;
7. die Zwischenstationen EP beginnen mit der Weiterleitung der von der sendenden Funkstation empfangenen Daten;
8. sollte eine neue Zwischenstation EP hinzukommen

a. errechnet sie ebenfalls individuell den Wert

$$|A_k| = \sqrt{\frac{SNR_{1k}}{\sigma_{1k}^2 SNR_{2k}}} \cdot \Lambda_N$$

b.sollte das Ergebnis ihre maximale Sendeleistung überschreiten, wird es auf diesen Maximalwert begrenzt

$$|A_k| = \frac{1}{\sqrt{\sigma_{1k}^2 \left(SNR_{1k} + 1\right)}}$$

und in Zukunft $SNR_{1k}$ zu der empfangenden Funkstation gesendet, ansonsten braucht das $SNR_{1k}$ nicht zu der empfangenden Funkstation übermittelt werden.

2.2.2.3 Ohne Signalisierung (Blind SFN Forwarding gemäß drittem Ansatz)

Die Optimierung des Signal-zu-Rausch-Verhältnis am Ort der empfangenden Funkstation $SNR_{SFN}$ kann ohne eine Signalisierung nur unter Berücksichtigung der lokal bekannten Systemparameter durchgeführt werden.

2.3 Three Hop SFN (Drei-Sprung-Gleichwellennetzwerk)

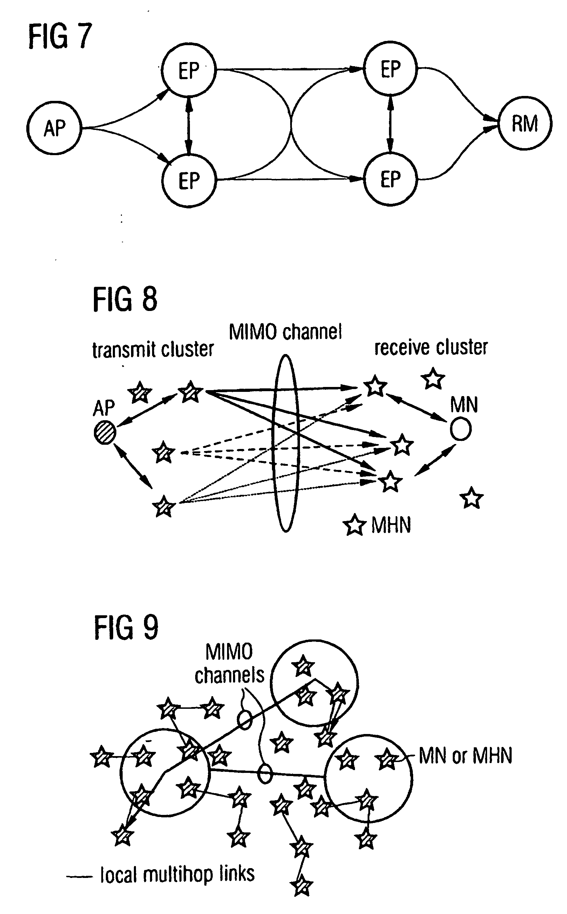

In der FIG 7 ist ein so genanntes Three Hop SFN System mit Zwischenstationen EP dargestellt. Dabei erfolgt die Datenübertragung von einer sendenden Funkstation AP über drei Sprünge, beispielsweise unter Einbeziehung von zwei Zwischenstationen EP für jeden Pfad, zu einer empfangenden Funkstation RM.

2.3.1 Mit Kenntnis der Kanalphasen

2.3.1.1 Mit Kanalparameter- und Empfangswert-Signalisierung (MIMO Forwarding gemäß erstem Ansatz)

Die Optimierung des Signal-zu-Rausch-Verhältnisses am Ort der empfangenden Funkstation $SNR_{SFN}$ kann bei einer Signalisierung unter Berücksichtigung aller Systemparameter durchgeführt werden.

2.3.1.2 Mit Kanalparameter Signalisierung (Adaptive SFN Forwarding gemäß zweitem Ansatz)

Eine Optimierung des Signal-zu-Rausch-Verhältnisses am Ort der empfangenden Funkstation $SNR_{SFN}$ kann bei einer Signalisierung unter Berücksichtigung aller Systemparameter durchgeführt werden.

2.3.1.3 Ohne Signalisierung (Blind SFN Forwarding gemäß drittem Ansatz)

Eine Optimierung des Signal-zu-Rausch-Verhältnisses am Ort der empfangenden Funkstation $SNR_{SFN}$ kann ohne eine Signalisierung nur unter Berücksichtigung der lokal bekannten Systemparameter durchgeführt werden.

Gemäß einer Ausgestaltung der Erfindung kooperieren mehrere einzelne Funkstationen und/oder Zwischenstationen EP und bilden eine verteilte, so genannte intelligente Antenne (Smart Antenna). Die einzelnen Antennenelemente sind dabei die typischerweise omni-direktionalen Antennen der Funkstationen bzw. Zwischenstationen EP. Werden in einem Adhoc-Netz mehrere Gruppen (Cluster) von Antennen zu verteilten Antennen zusammengefasst, können über diese vorteilhaft so genannte MIMO-Kanäle (Multiple Input Multiple Output) gebildet werden, um beispielsweise ein räumliches Multiplexen zu erzielen. MIMO-Kanäle, beispielsweise entsprechend dem bekannten BLAST Prinzip, ermöglichen eine sehr hohe spektrale Effizienz in Bit/s/Hz.

Die erfindungsgemäße Clusterung von Antennen ermöglicht in Adhoc-Netzen die Einführung von Hierarchieebenen. Zur Übertragung über große Entfernungen werden beispielsweise die leistungsfähigen MIMO Kanäle verwendet, während kürzere Entfernungen mit der bekannten Multihop-Übertragung über mehrere Zwischenstationen überbrückt werden. Hierdurch sind skalierbare Adhoc-Netze auch für den Fall einer nicht lokal begrenzten Übertragung realisierbar.

Derartige MIMO-Antennen erfordern je nach Algorithmus eine Kopplung der einzelnen Antennen bzw. Antennenelemente, welches einer zusätzlichen Signalisierung, beispielsweise zum Austausch von Kanalschätzungen, bedarf. Das verteilte Konzept besitzt den Vorteil, dass die Funk- bzw. Zwischenstationen ohne aufwändige und große Antennen mit zugehörigen HF-Frontends auskommen, und dennoch eine sehr hohe spektrale Effizienz für die verteilten MIMO Antennen ermöglicht wird.

MIMO Ansätze erfordern weiterhin typischerweise, dass die Funkkanäle zwischen den einzelnen Antennenelementen unkorreliert sind. Je nach Umgebung sollten die Antennenelemente daher einen Abstand von mehreren Wellenlängen der verwendeten Übertragungsfrequenz aufweisen. Für verteilte Antennen ist diese Anforderung besonders leicht zu erfüllen. Prinzipiell können mit verteilten Antennen alle bekannten Smart Antenne Konzepte realisiert werden, wie beispielsweise SDMA (Space Division Multiple Access) oder steuerbare Antennen mit Interferenzreduktion.

Die nachfolgende Beschreibung erläutert eine weitere mögliche Kooperation zwischen mehreren Funk- bzw. Zwischenstationen in einem SFN (Single Frequency Network). In SFNs ist ein spezielles Multihop Verfahren, bei dem mehrere Zwischenstationen gleichzeitig Daten an eine weit entfernte empfangende Funkstation RM (Remote Mobile Terminal) übertragen, einsetzbar. Durch einen vorangehend beschriebenen Informationsaustausch zwischen den Zwischenstationen EP und geeignet gewählte Gewichtungsfaktoren in den Zwischenstationen EP ist ein gegenüber üblichen SFN-Netzen zusätzlicher Gewinn möglich. Dieser liegt in der Größenordnung klassischer Maximum Ratio Combining Verfahren. Generell haben die erfindungsgemäßen Verfahren der verteilten Antennen den Vorteil, dass die Leistungsfähigkeit mit steigender Anzahl an Funk- bzw. Zwischenstationen zunimmt, d.h. die Verfahren passen sich selbständig an das normalerweise erhöhte Datenaufkommen im Falle vieler Stationen an.

FIG 8 zeigt das erfindungsgemäße Clustern von jeweils mehreren Zwischenstationen MHN (Multihop Nodes) sowohl auf der Sende- transmit cluster als auch auf der Empfangsseite receive cluster, um jeweils eine verteilte MIMO-Antenne für ein räumliches Multiplexen (Spatial Multiplexing) zur Bildung eines MIMO-Kanal MIMO channel zu konfigurieren. Im Unterschied zu herkömmlichen MIMO-Antennen besteht dabei keine direkt verdrahtete Verbindung zwischen den einzelnen Antennenelementen des jeweiligen Clusters. Das räumliche Multiplexen kombiniert die Signale aller empfangenden Antennenelemente, um hieraus den resultierenden Datenstrom zu ermittelt. Dieses Konzept erfordert einen erfindungsgemäßen Austausch von Signalisierungsinformationen zwischen den verteilten Antennen bzw. Stationen, wie beispielsweise bezüglich jeweiliger Kanalschätzungen.

FIG 9 zeigt weiterhin eine beispielhafte Anwendung eines verteilten Antennenkonzeptes in einem Adhoc-Netzwerk. In diesem Fall werden die MIMO-Kanäle MIMO channels zum Aufbau einer Verbindung zwischen weit voneinander entfernten Einrichtungen des Adhoc-Netzwerkes verwendet. Geringe Entfernungen, die beispielsweise nur wenige Hops erfordern, werden mittels bekannter Multihop-Verbindungen local multihop links überbrückt, da hierdurch Frequenz- und Zeitressourcen räumlich wieder verwendet werden können. Die Kreise in der FIG 9 geben jeweils beispielhaft ein Cluster von mehreren Zwischenstationen MHN (Multihop Node) bzw. empfangenden Funkstationen MN an, die jeweils entsprechend einer intelligenten Antenne agieren, und eine Übertragung zu einem weiter entfernten Cluster ermöglichen. Vorteilhaft wird durch die Clusterung von weit voneinander entfernten Teilen des Adhoc-Netzwerkes eine höhere spektrale Effizienz erzielt, wodurch die Skalierbarkeit des gesamten Netzwerkes erleichtert wird.

**Patentansprüche**

1. Verfahren zur Signalübertragung in einem Funk-Kommunikationssystem, bei dem
   Signale einer sendenden ersten Funkstation (AP) über zumindest zwei Zwischenstationen (EP) zu einer empfangenden zweiten Funkstation (RM, MN) übertragen werden, wobei zwischen den zumindest zwei Zwischenstationen (EP) eine Signalisierung zur Konfiguration der Aussendung zu der empfangenden zweiten Funkstation (RM, MN) durchgeführt wird.

2. Verfahren nach Anspruch 1, bei dem
   zwischen den zumindest zwei Zwischenstationen (EP) und der ersten (AP) und/oder der zweiten Funkstation (RM, MN) Kenngrößen signalisiert werden.

3. Verfahren nach Anspruch 1, bei dem
   in den Zwischenstationen (EP) Kenngrößen aus von der ersten (AP) und/oder zweiten Funkstation (RM, MN) empfangenen Signalen ermittelt werden.

4. Verfahren nach Anspruch 2 oder 3, bei dem
   die Kenngrößen in den Zwischenstationen (EP) zur Bestimmung von Gewichtungsfaktoren verwendet werden.

5. Verfahren nach Anspruch 4, bei dem
   die Kenngrößen Informationen über Kanaleigenschaften beinhalten.

6. Verfahren nach Anspruch 5, bei dem
   eine Aktualisierung der Informationen über die Kanaleigenschaften nur bei Änderungen der Kanaleigenschaften durchgeführt wird.

7. Verfahren nach einem vorhergehenden Anspruch, bei dem Antenneneinrichtungen der zumindest zwei Zwischenstationen (EP) entsprechend Antennenelementen einer intelligenten Antenne konfiguriert werden.

**8.** Verfahren nach einem vorhergehenden Anspruch, bei dem Antenneneinrichtungen einer Anzahl von Zwischenstationen (EP, MHN), die sich in dem Funkversorgungsbereich der sendenden ersten Funkstation (AP) befinden, und Antenneneinrichtungen einer Anzahl von weiteren Zwischenstationen (EP, MHN), die sich in dem Funkversorgungsbereich der empfangenden zweiten Funkstation (RM, MN) befinden, jeweils zu einer intelligenten Antenne gruppiert werden.

**9.** Verfahren nach einem vorhergehenden Anspruch, bei dem in den zumindest zwei Zwischenstationen (EP) Vorverzerrungs- oder Entzerrungsprozeduren für die Datenübertragung eingesetzt werden.

**10.** Verfahren nach einem vorhergehenden Anspruch, bei dem die Übertragung zwischen den Stationen gemäß einem Gleichwellen-Netz (SFN) durchgeführt wird.

**Revendications**

**1.** Procédé de transmission de signaux dans un système de radiocommunication, dans lequel des signaux d'une première station radio émettrice (AP) sont transmis vers une deuxième station radio réceptrice (RM, MN) par l'intermédiaire d'au moins deux stations intermédiaires (EP), une signalisation pour la configuration de l'émission vers la deuxième station radio réceptrice (RM, MN) étant effectuée entre les au moins deux stations intermédiaires (EP).

**2.** Procédé selon la revendication 1, dans lequel des grandeurs caractéristiques sont signalées entre les au moins deux stations intermédiaires (EP) et la première (AP) et/ou la deuxième station radio (RM, MN).

**3.** Procédé selon la revendication 1, dans lequel des grandeurs caractéristiques tirées de signaux reçus de la première (AP) et/ou la deuxième station radio (RM, MN) sont déterminées dans les stations intermédiaires (EP).

**4.** Procédé selon la revendication 2 ou 3, dans lequel les grandeurs caractéristiques sont utilisées dans les stations intermédiaires (EP) pour déterminer des facteurs de pondération.

**5.** Procédé selon la revendication 4, dans lequel les grandeurs caractéristiques contiennent des informations sur des caractéristiques de canal.

**6.** Procédé selon la revendication 5, dans lequel une actualisation des informations sur les caractéristiques de canal n'est opérée qu'en cas de modifications des caractéristiques de canal.

**7.** Procédé selon l'une des revendications précédentes, dans lequel des équipements d'antenne des au moins deux stations intermédiaires (EP) sont configurés de manière correspondant à des éléments d'antenne d'une antenne intelligente.

**8.** Procédé selon l'une des revendications précédentes, dans lequel des équipements d'antenne d'un nombre de stations intermédiaires (EP, MHN) qui se trouvent dans la zone de desserte radio de la première station radio émettrice (AP) et des équipements d'antenne d'un nombre d'autres stations intermédiaires (EP, MHN) qui se trouvent dans la zone de desserte radio de la deuxième station radio réceptrice (RM, MN) sont réunis pour constituer respectivement une antenne intelligente.

**9.** Procédé selon l'une des revendications précédentes, dans lequel sont mises en oeuvre, dans les au moins deux stations intermédiaires (EP), des procédures de prédistorsion ou d'égalisation pour la transmission de données.

**10.** Procédé selon l'une des revendications précédentes, dans lequel la transmission entre les stations est effectuée selon un réseau à fréquence commune (SFN).

**Claims**

**1.** Method for transmitting signals in a radio communication system, whereby signals from a transmitting first radio station (AP) are transmitted via at least two intermediate stations (EP) to a receiving second radio station (RM, MN), with signalling being carried out between the at least two intermediate stations (EP) to configure the transmission to the receiving second radio station (RM, MN).

**2.** Method in accordance with claim 1,
with characteristic quantities being signalled between the at least two intermediate stations (EP) and the first (AP) and/or second radio station (RM, MN).

**3.** Method in accordance with claim 1,
with characteristic quantities being determined in the intermediate stations (EP) from the signals received from the first (AP) and/or second radio station (RM, MN).

**4.** Method in accordance with claim 2 or 3,
with the characteristic quantities being used in the intermediate stations (EP) to determine weighting factors.

**5.** Method in accordance with claim 4,
with the characteristic quantities containing information on channel properties.

**6.** Method in accordance with claim 5,
with the updating of information on the channel properties taking place only if there is a change in channel properties.

**7.** Method in accordance with a preceding claim, with antenna devices of the at least two intermediate stations (EP) being configured corresponding to antenna elements of a smart antenna.

**8.** Method in accordance with a preceding claim, with antenna devices of a number of intermediate stations (EP, MHN) located in the radio coverage area of the transmitting first radio station (AP), and antenna devices of a number of further intermediate stations (EP, MHN) located in the radio coverage area of the receiving second radio station (RM, MN), being grouped in each case to form a smart antenna.

**9.** Method in accordance with a preceding claim, with pre-equalisation or equalisation procedures for the data transmission being used in the at least two intermediate stations (EP).

**10.** Method in accordance with a preceding claim, with the transmission taking place between the stations in accordance with a single frequency network (SFN).

## FIG 1

## FIG 2

| Multi Hop SFN Systeme |
|---|

| Terminals ohne Kenntnis der Phase des Kanals | Terminals mit Kenntnis der Phase des Kanals |
|---|---|
| MIMO Forwarding   Adap SFN Forwarding   Blind. SFN Forwarding | MIMO Forwarding   Adap SFN Forwarding   Blind. SFN Forwarding |

## FIG 3

# FIG 4

# FIG 5

FIG 6

SNR$_{SFN}$

$|A_1|$     $|A_0|$

Höhenlinien SNR$_{SFN}$

$|A_1|$     $|A_0|$

## FIG 7

## FIG 8

transmit cluster    MIMO channel    receive cluster

☆ MHN

## FIG 9

MIMO channels

MN or MHN

— local multihop links